# EUROPÄISCHE PATENTSCHRIFT

(11) **EP 0 761 484 B1**
(45) Veröffentlichungstag und Bekanntmachung des Hinweises auf die Patenterteilung: **15.09.1999**
(21) Anmeldenummer: 96112105.0
(22) Anmeldetag: 26.07.1996
(51) Int. Cl.: B60J 7/22

(54) **Windschott für ein Cabriolet**
Wind protector for a convertible
Protecteur de vent pour cabriolet

(30) Priorität: 09.09.1995 DE 19534584
(43) Veröffentlichungstag der Anmeldung: 12.03.1997
(73) Patentinhaber: Dr.Ing.h.c. F. Porsche Aktiengesellschaft, 70435 Stuttgart (DE)
(72) Erfinder: Reuter, Dieter, 71139 Ehningen (DE)

(56) Entgegenhaltungen:
- EP-A- 0 233 777
- DE-A- 4 239 428
- DE-U- 8 523 831
- DE-U- 9 204 439

## Beschreibung

Die Erfindung bezieht sich auf ein Windschott für ein Cabriolet gemäß dem Oberbegriff des Patentanspruchs 1.

Aus dem DE-GM 91 11 779 geht ein Cabriolet hervor, das hinter den vorderen Sitzen mit einem feststehenden Überrollbügel versehen ist. Der Überrollbügel überspannt den Fahrgastraum bogenförmig von einer Seite des Aufbaus zur gegenüberliegenden Seite. Am Überrollbügel ist oberhalb einer Gürtellinie ein großflächiges aufrechtes Windschott befestigt, das durch einen stoffbespannten nach unten offenen Rahmen gebildet wird. Derartige Überrollbügel und großflächige Windschotts beeinträchtigen das stylistische Erscheinungsbild eines offenen Fahrzeuges negativ.

Die DE 35 37 644 C1 zeigt ebenfalls ein Cabriolet mit einem feststehenden Überrollbügel und einem Windschott, wobei das Windschott eine stehende Scheibe umfaßt, die sich örtlich am Überrollbügel abstützt. Die Scheibe erstreckt sich lediglich über einen Teilbereich der Höhe des Überrollbügels.

Die DE-GM 85 23 831 behandelt einen feststehenden Überrollbügel für ein zweisitziges offenes Kraftfahrzeug, der oberhalb einer querverlaufenden Verbindungsstange zwei vorstehende Bügelabschnitte aufweist. Bei dieser Anordnung ist kein Windschott vorgesehen.

Aufgabe der Erfindung ist es, an einem mit einem Windschott versehenen Überrollbügel solche Vorkehrungen zu treffen, daß einerseits eine gute Funktion von Überrollbügel und Windschott gewährleistet ist und daß andererseits das stylistische Erscheinungsbild des offenen Fahrzeuges durch den Überrollbügel und das Windschott positiv beeinflußt wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der lediglich in seitlich außenliegenden Bereichen hochgezogene Bügelabschnitte aufweisende Überrollbügel neben einer guten Funktion ein stylistisch ansprechendes Aussehen aufweist, da er unauffällig in den Formverlauf des Fahrzeuges integriert ist. Das aus einem Mittelteil und zwei Seitenteilen zusammengesetzte Windschott ist in einfacher Weise am Überrollbügel festlegbar und zeichnet sich ebenfalls durch eine gute Funktion aus. Das Mittelteil wird durch eine transparente, stehend angeordnete Scheibe aus Kunststoff gebildet, die leichtgewichtig ist und eine kratzfeste Beschichtung aufweist. Durch die rahmenlose Ausbildung des oberen Randes der Scheibe zeichnet sich diese Kontur nicht im Innenrückblickspiegel ab, obwohl sie im Sichtfeld des Innenrückblickspiegels liegt. Durch die transparente Ausbildung der Scheibe wirkt das Windschott weder bei offenem Verdeck, noch bei geschlossenem Verdeck störend, so daß es nur äußerst selten demontiert oder abgeklappt werden muß.

Die Scheibe ist über Steckverbindungen und/oder eine Rastverbindung am Überrollbügel lösbar befestigt, d.h. sie kann bei Bedarf abgenommen werden. Infolge ihrer kompakten Abmessungen gegenüber konventionellen Windschotts läßt sich die abgenommene Scheibe leicht im Fahrzeug unterbringen. Die durch Kunststoffspritzgitter oder durch mit einem Rahmen versehene Lochbleche gebildeten Seitenteile mit Gitterstruktur sind nach hinten hin ausgebeult, damit die Rücksitzlehne bzw. die Kopfstütze des vorderen Sitzes in den Bauraum der Bügelabschnitte hineinragen kann, wodurch der Verstellbereich des Sitzes bzw. der Rückenlehne erweitert wird.
Die Seitenteile sind von hinten über Clipsverbindungen oder dergleichen in die Öffnungen der Bügelabschnitte einsetzbar.

Ein Ausführungsbeispiel der Erfindung ist in der Zeichnung näher dargestellt und wird im folgenden näher erläutert:

Es zeigt
- Fig. 1: eine perspektivische Ansicht von hinten auf einen Überrollbügel eines offenen Kraftfahrzeuges (Cabriolet) mit einem am Überrollbügel angebrachten Windschott,

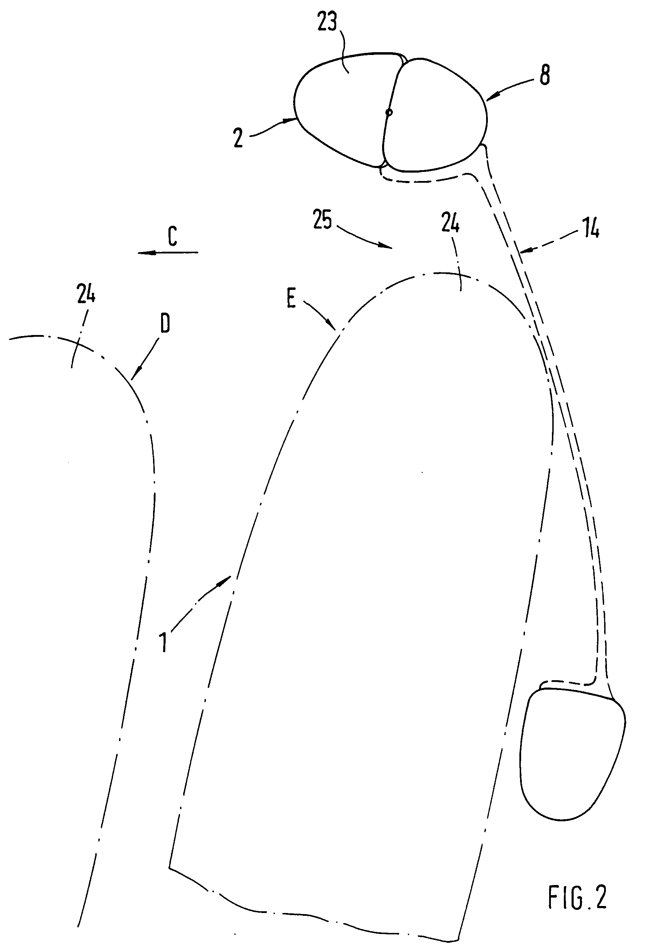

- Fig. 2: einen Schnitt nach der Linie II-II der Fig. 1 in größerem Maßstab und
- Fig. 3: eine Ansicht entsprechend Fig. 1 einer weiteren Ausführungsform des Windschotts.

Ein nicht näher dargestelltes zweisitziges offenes Kraftfahrzeug (Cabriolet) weist hinter den vorderen Sitzen 1 einen feststehenden Überrollbügel 2 auf, wobei am Überrollbügel 2 ein Windschott 3 angebracht ist, durch das die auf den vorderen Sitzen 1 befindlichen Insassen vor von rückwärts her einströmender störender Luftströmung geschützt werden (unangenehme Zugerscheinungen im Kopf- bzw. Nackenbereich).
Der über aufrechte Stützabschnitte am Fahrzeugboden festgelegte Überrollbügel 2 weist etwa in Höhe der Gürtellinie 4 zumindest einen sich in Fahrzeugquerrichtung erstreckenden Rohrabschnitt 5 auf, der am Ausführungsbeispiel einen leicht gebogenen Formverlauf aufweist. In seitlichen außenliegenden Bereichen 6, 7 sind vom querverlaufenden Rohrabschnitt 5 zwei nach oben hin vorstehende Bügelabschnitte 8, 9 weggeführt. Jeder Bügelabschnitt 8, 9 begrenzt zusammen mit einem Teilbereich des querverlaufenden Rohrabschnitts 5 eine Öffnung 10, 11. Der der Fahrzeugmittellängsebene A-A zugekehrte Bereich der Bügelabschnitte 8, 9 und ein mittlerer Bereich des Rohrabschnitts 5 definieren einen nach oben hin offenen Ausschnitt 12 des Überrollbügels.
Das sich in aufrechter Richtung erstreckende Windschott 3 setzt sich aus einem Mittelteil 13 und zwei Seitenteilen 14, 15 zusammen, wobei die Seitenteile 14, 15 in die Öffnungen 10, 11 der Bügelabschnitte 8, 9 und das Mittelteil 13 in den Abschnitt 12 des Überrollbügels 2 eingesetzt sind.

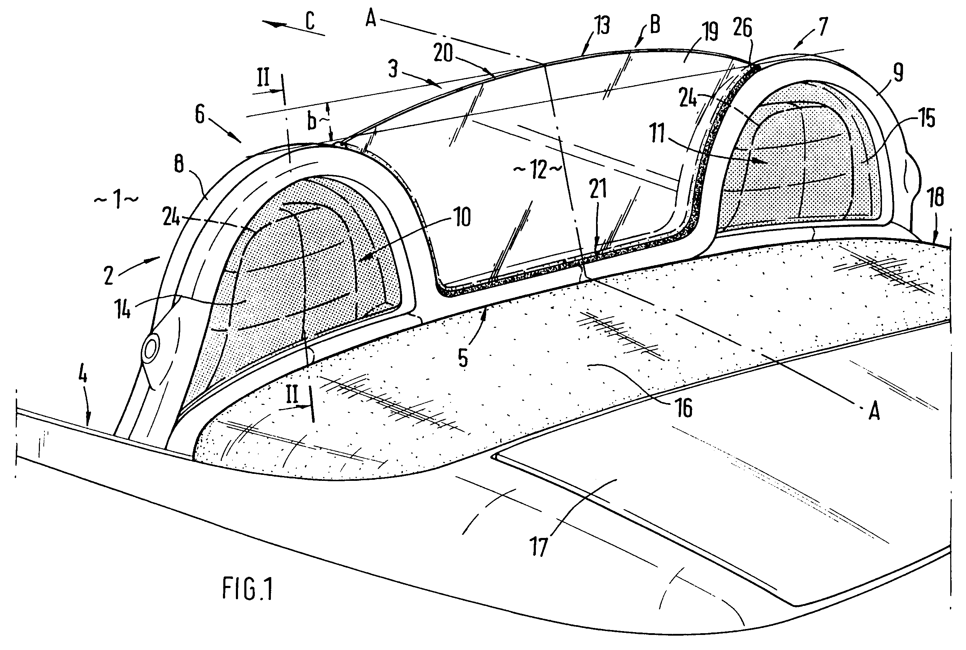

In Fig. 1 ist die Betriebsstellung B des Windschotts 3 dargestellt, wobei ein vorderer formsteifer Verdeckabschnitt 16 dem Verdeckkastendeckel 17 vorgelagert ist und abschnittsweise eine Abdeckung 18 des nicht gezeigten darunterliegenden Verdeckkastens bildet.

Die Abdeckung 18 ist mit ihrem vorderen Ende nahe an den querverlaufenden Rohrabschnitt 5 des Überrollbügels 2 herangeführt. Der verbleibende Spalt zwischen der Unterkante des Rohrabschnitts 5 und der oberen Begrenzungsfläche der Abdeckung 18 kann bei Bedarf durch ein zusätzliches Teil verschlossen werden.

Das Mittelteil 13 wird durch eine transparente, stehend angeordnete Scheibe 19 gebildet, die lösbar mit dem Überrollbügel 2 verbunden ist.
Aus Gewichtsgründen ist die Scheibe 19 vorzugsweise aus geeignetem Kunststoff (Plexiglas) hergestellt, wobei die Scheibe 19 mit einer kratzfesten Beschichtung und/oder einer Tönung versehen sein kann.
Die Scheibe 19 kann jedoch auch aus Glas gefertigt sein.
Im Ausführungsbeispiel weist die Scheibe 19 keine Öffnungen auf, alternativ kann die Scheibe jedoch auch mit einer Vielzahl von Öffnungen versehen sein.

Der obere querverlaufende Rand 20 der Scheibe 19 ist rahmenlos ausgebildet;
dadurch ist sichergestellt, daß sich der im Blickfeld des nicht gezeigten Innenrückblickspiegels befindliche Rand 20 nicht am Innenrückblickspiegel abzeichnet.
Die Scheibe 19 wird von oben oder hinten in die Ausnehmung 12 des Überrollbügels 2 eingesetzt und ist beispielsweise über eine oder mehrere Steckverbindungen 21 am Überrollbügel 2 festgelegt.
Zwischen dem unteren Rand der Scheibe 19 und dem querverlaufenden Rohrabschnitt 5 kann eine lösbare Rastverbindung 22 zur Festlegung der Scheibe in der Betriebsstellung B vorgesehen sein.
Bei Bedarf kann die Scheibe 19 schnell und einfach vom Überrollbügel 2 gelöst und im Fahrzeug untergebracht werden. Die Scheibe 19 weist relativ kompakte Abmessungen auf. Am unteren Rand der Scheibe 19 und/oder an den beiden seitlich außenliegenden aufrechten Rändern der Scheibe 19 kann ein Einfaßrahmen 26 aus Aluminium, Kunststoff oder Gummi vorgesehen sein. Die Scheibe 19 ist randseitig vorzugsweise zwischen dem Überrollbügel 2 und einer Verkleidung 23 des Überrollbügels 2 eingeklemmt. Es können aber auch V-förmige Aufnahmen zum Einstecken der Scheibe 19 am Überrollbügel 2 vorgesehen werden.

Der obere Rand 20 der Scheibe 19 ist - in der Vorderansicht gesehen - bogenförmig ausgebildet, wobei der Rand von der Fahrzeuglängsmittelebene A-A zu den beiden Bügelabschnitten 8, 9 hin etwas abfällt.
An den beiden oberen Außenseiten verläuft die Scheibe 19 etwa bündig oder geringfügig tiefer als die obere Begrenzung der Bügelabschnitte 8, 9.
In der Fahrzeuglängsmittelebene A-A überragt die Scheibe 19 die Bügelabschnitte 8, 9 um ein Maß b.

Die beiden Seitenteile 14, 15 werden im Ausführungsbeispiel durch Kunststoffspritzgitter oder durch mit einem umfangseitigen Rahmen versehene Lochbleche gebildet und weisen eine Gitterstruktur auf. Die Seitenteile 14, 15 sind durch eine Clipsverbindung, Klettbandverschlüsse oder dergleichen am Überrollbügel 2 festlegbar. Vorteilhafterweise sind die Seitenteile 14, 15 benachbart eines hinteren Randes der Bügelabschnitte 8, 9 angeordnet und entgegen der Fahrtrichtung C ausgebeult. Dadurch wird erreicht, daß ein oberer Abschnitt 24 der angrenzenden Rückenlehne des Sitzes 1 oder der Kopfstütze in den Freiraum 25 der Bügelabschnitte 8, 9 hineinragen kann, wodurch der Verstellweg des Sitzes 1 bzw. der Rückenlehne/Kopfstütze vergrößert wird. Der Sitz 1 kann also von einer Stellung D in eine Stellung E verlagert werden.

Die Seitenteile 14, 15 könnten ebenso wie das Mittelteil 13 auch aus Kunststoff, Glas oder dergleichen gebildet werden. Ferner könnten die Teile 13, 14, 15 des Wndschotts 3 auch als flexibles Netz, textiles Gewebe oder dergleichen ausgebildet sein.

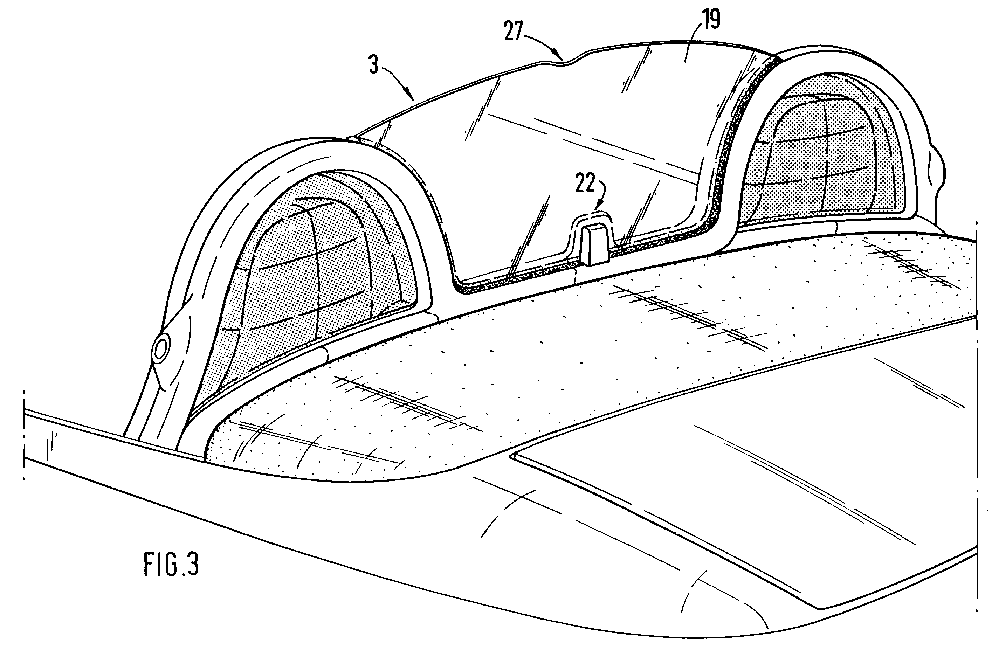

Fig. 3 zeigt eine weitere Ausführungsform des Windschotts 3, wobei an der Scheibe 19 in einem mittleren Bereich des oberen Randes 20 eine muldenförmige Einprägung 27 vorgesehen ist. Ferner ist die lösbare Rastverbindung 22 zwischen der Unterseite der Scheibe 19 und dem angrenzenden querverlaufenden Rohrabschnitt schematisch dargestellt. Die Rastverbindung 22 ist auf der dem Fahrgastraum abgekehrten Seite der Scheibe 19 angeordnet.

## Patentansprüche

1. Windschott (3) für ein Cabriolet mit einem feststehenden Überrollbügel (2), wobei das Windschott (3) in seiner aufrechten Betriebsstellung am Überrollbügel (2) festlegbar ist, dadurch gekennzeichnet, daß der Überrollbügel (2) einen etwa in Höhe der Gürtellinie (4) verlaufenden, sich in Fahrzeugquerrichtung erstreckenden Rohrabschnitt (5) umfaßt, von dem in seitlich außenliegenden Bereichen (6, 7) nach oben hin vorstehende Bügelabschnitte (8, 9) weggeführt sind und daß sich das Windschott (3) aus einem Mittelteil (13) und zwei Seitenteilen (14, 15) zusammensetzt, wobei die Seitenteile (14, 15) in die Öffnungen (10, 11) der Bügelabschnitte (8, 9) und das Mittelteil (13) in den durch die Bügelabschnitte (8, 9) und den querverlaufenden Rohrabschnitt (5) begrenzten Ausschnitt (12) des Überrollbügels (2) eingesetzt sind.

2. Windschott nach Anspruch 1, dadurch gekennzeichnet, daß das Mittelteil (13) durch eine transparente, stehend angeordnete Scheibe (19) aus Kunststoff gebildet wird, die über zumindest eine Steckverbindung (21) und/oder eine Rastverbindung (22) am Überrollbügel (2) in Lage gehalten ist.

3. Windschott nach den Ansprüchen 1 und 2, dadurch gekennzeichnet, daß das Mittelteil (13) abnehmbar ausgebildet ist.

4. Windschott nach Anspruch 2, dadurch gekennzeichnet, daß der obere querverlaufende Rand (20) der Scheibe (19) rahmenlos ausgebildet ist.

5. Windschott nach den Ansprüchen 2 und 3, dadurch gekennzeichnet, daß der untere Rand und/oder die beiden seitlich außenliegenden Ränder der Scheibe (19) vorzugsweise mit einem Einfaßrahmen (26) versehen sind.

6. Windschott nach den Ansprüchen 1 bis 4, dadurch gekennzeichnet, daß der obere Rand (20) der Scheibe (19) - in der Vorderansicht gesehen - einen bogenförmigen Verlauf aufweist, wobei der Rand (20) von der Fahrzeugmittellängsebene A-A zu den beiden Bügelabschnitten (8, 9) hin etwas abfällt.

7. Windschott nach Anspruch 1, dadurch gekennzeichnet, daß die Seitenteile (14, 15) des Windschotts (3) durch Kunststoffspritzgitter oder mit einem Rahmen versehene Lochbleche gebildet werden.

8. Windschott nach Anspruch 6, dadurch gekennzeichnet, daß die Seitenteile (14, 15) durch eine Clipsverbindung, Klettbandverschlüsse oder dergleichen am Überrollbügel (2) festgelegt sind.

9. Windschott nach Anspruch 7, dadurch gekennzeichnet, daß die Seitenteile (14, 15) entgegen der Fahrtrichtung C ausgebeult sind, dergestalt, daß ein oberer Abschnitt (24) der angrenzenden Rückenlehne oder der Kopfstütze des vorderen Sitzes (1) in den Freiraum (25) des Bügelabschnittes (8, 9) hineinragen kann.

## Claims

1. A windbreak (3) for a cabriolet, having a fixed roll bar (2), wherein the windbreak (3) is fixable in the upright operating position thereof on the roll bar (2), **characterized in that** the roll bar (2) comprises a tube portion (5) extending substantially at the level of the waist line (4) and in the transverse direction of the vehicle, roll-bar portions (8, 9) extending from the said tube portion (5) and projecting upwards in laterally outer areas (6, 7), and the windbreak (3) is formed by a central part (13) and two lateral parts (14, 15), wherein the lateral parts (14, 15) are inserted into the openings (10, 11) in the roll-bar portions (8, 9) and the central part (13) is inserted into the portion (12) of the roll bar (2) bounded by the roll-bar portions (8, 9) and the transversely extending tube portion (5).

2. A windbreak according to Claim 1, **characterized in that** the central part (13) is formed by a transparent upright plate (19) of plastics material held in position on the roll bar (2) by way of at least one plug-in connexion (21) and/or a catch connexion (22).

3. A windbreak according to Claims 1 and 2, **characterized in that** the central part (13) is removable.

4. A windbreak according to Claim 2, **characterized in that** the upper, transversely extending edge (20) of the plate (19) is constructed without a frame.

5. A windbreak according to Claims 2 and 3, **characterized in that** the lower edge and/or the two laterally outer edges of the plate (19) are preferably provided with a bordering frame (26).

6. A windbreak according to Claims 1 to 4, **characterized in that** the upper edge (20) of the plate (19) - as seen in a front view - has a curved shape, wherein the edge (20) drops slightly from the median longitudinal plane **A-A** of the vehicle towards the two roll-bar portions (8, 9).

7. A windbreak according to Claim 1, **characterized in that** the lateral parts (14, 15) of the windbreak (3) are formed by injection-moulded lattices of plastics material or by perforated metal sheets provided with a frame.

8. A windbreak according to Claim 6, **characterized in that** the lateral parts (14, 15) are secured to the roll bar (2) by a clip connexion, hook-and-loop fastenings or the like.

9. A windbreak according to Claim 7, **characterized in that** the lateral parts (14, 15) are flattened contrary to the direction of travel **C** in such a way that an upper portion (24) of the adjacent backrest or the head support of the front seat (1) can project into the free space (25) of the roll-bar portion (8, 9).

## Revendications

1. Protection contre le vent (3) pour un cabriolet avec un arceau de sécurité (2) fixe, la protection contre le vent (3) pouvant être fixee, dans sa position de fonctionnement verticale, à l'arceau de sécurité (2), caractérisée en ce que l'arceau de sécurité (2) comprend une portion de tube (5) s'étendant a peu pres a hauter de la ligne mediane (4), dans la direction transversale du vèhicule, à partir de laquelle s'éloignent des portions d'arceau (8, 9) faisant saillie vers le haut, dans des zones (6, 7) situées lateralement à l'extérieur, et en ce que la protection contre le vent (3) est constituée d'une partie centrale (13) et de deux parties latérales (14, 15), les parties latérales (14, 15) étant inserées dans les ouvertures (10, 11) des portions d'arceau (8, 9) et la partie centrale (13), dans la découpe (12) de l'arceau de sécurité (2), délimitée par les portions d'arceau (8, 9) et la portion de tube (5) s'étendant transversalement.

2. Protection contre le vent selon la revendication 1, caractérisée en ce que la partie centrale (13) est formée par une vitre (19) transparente, disposée verticalement, en matière plastique, qui est maintenue en position sur l'arceau de sécurité (2), par au moins un assemblage a enfichage (21) et,ou un assemblage a encliquetage (22).

3. Protection contre le vent selon les revendications 1 et 2, caractérisée en ce que la parie centrale (13) est réalisée de manière à pouvoir être enlevée.

4. Protection contre le vent selon la revendication 2, caractérisée en ce que le bord (20) supérieur s'étendant transversalement de la vitre (19) est sans cadre.

5. Protection contre le vent selon les revendications 2 et 3, caractérisée en ce que le bord inférieur et/ou les deux bords s'étendant latéralement à l'extérieur de la vitre (19) sont pourvus de préférence d'un cadre de monture (26).

6. Protection contre le vent selon les revendications 1 à 4, caractérisée en ce que le bord supérieur (20) de la vitre (19) - vu de l'avant - presente un parcours en arc, le bord (20) descendant légèrement depuis le plan médian longitudinal (A-A) du véhicule vers les deux portions d'arceau (8, 9).

7. Protection contre le vent gelon la revendication 1, caractérisée en ce que les parties laterales (14, 15) de la protection contre le vent (3) sont formées par des grilles en matiere plastique moulees par injection ou par des toles perforées pourvues d'un cadre.

8. Protection contre le vent selon la revendication 6, caractérisée en ce que les parties latérales (14, 15) sont fixées à l'arceau de sécurité (2) par un assemblage clipsè, par des fermetures à bande velcro ou similaires.

9. Protection contre le vent selon la revendication 7, caractérisée en ce que les parties latérales (14, 15) sont bombées dans le sens contraire au sens de marche (C) de manière qu'une portion supérieure (24) du dossier adjacent ou de l'appuie-tête du sieqe avant (1) puisse pénétrer dans l'espace libre (25) de la portion d'arceau (8, 9).
